# FASCICULE DE BREVET EUROPEEN

(11) **EP 2 092 867 B1**
(45) Date de publication et mention de la délivrance du brevet: **15.09.2010**
(21) Numéro de dépôt: 09356009.2
(22) Date de dépôt: 16.02.2009
(51) Int. Cl.: A47J 43/08, A47J 43/044

(54) **Appareil électroménager de préparation culinaire comportant un dispositif d'éjection d'outil de travail rotatif**
Haushaltsgerät zur Essenszubereitung, das eine Auswurfvorrichtung für ein drehendes Arbeitsinstrument umfasst
Electrical kitchen appliance comprising a device for ejecting the rotating tool

(30) Priorité: 20.02.2008 FR 0800913
(43) Date de publication de la demande: 26.08.2009
(73) Titulaire: Seb S.A., 69130 Ecully (FR)
(72) Inventeur: Galdi, Wilson, São Paulo/SP 03414-050 (BR); David, Laurent, 65360 Bernac-Dessus (FR); Durris, Cyril, 65690 Montignac (FR)
(74) Mandataire: Kiehl, Hubert

(56) Documents cités:
- FR-A- 2 794 960
- US-A- 2 615 691
- US-A- 3 333 825
- US-A- 4 176 971

## Description

La présente invention concerne le domaine technique des appareils électroménagers de préparation culinaire comportant un boîtier moteur et au moins un outil rotatif comportant une extrémité d'entraînement insérée dans le boîtier moteur, usuellement appelés batteurs.

Les appareils du type précité peuvent être tenus à la main et/ou être disposés sur un support en vue de leur fonctionnement.

La présente invention concerne plus particulièrement le dispositif d'éjection d'au moins un outil rotatif.

Il est connu du document FR 1 228 932 un appareil de type batteur comportant un boîtier muni d'une poignée, ainsi qu'un dispositif d'éjection d'outils rotatifs utilisant une tige repoussée directement par un bouton d'éjection disposé au voisinage de la poignée. L'éjection des outils rotatifs est obtenue en exerçant une pression sur le bouton d'éjection. La construction proposée conduit à actionner le bouton d'éjection avec le pouce, ce qui est antinomique avec une préhension efficace de la poignée de l'appareil. De ce fait, l'utilisateur peut être conduit à tenir le boîtier de l'appareil d'une main et à actionner le bouton d'éjection de l'autre main.

Il est connu du document US 2 615 694 un appareil selon le préambule de la revendication 1. Toutefois dans cet appareil la poignée est reliée au boîtier par ses deux extrémités. L'organe de commande du dispositif d'éjection des outils rotatifs est peu visible. Cet organe de commande est disposé juste sous la poignée, ce qui favorise un actionnement par inadvertance de l'organe de commande.

Un but de la présente invention, qui est définie par la revendication 1, est d'améliorer l'ergonomie d'un appareil électroménager du type précité.

Ce but est atteint avec un appareil électroménager de préparation culinaire comportant un boîtier muni d'une poignée disposée au dessus d'un corps principal, et un outil de travail rotatif présentant une extrémité d'entraînement insérée dans une ouverture inférieure du corps principal, l'extrémité d'entraînement coopérant avec un dispositif d'entraînement en rotation et avec un dispositif d'éjection comprenant un organe de commande, l'organe de commande présentant une zone de préhension agencée en regard de la partie supérieure du corps principal, ladite zone de préhension étant montée mobile entre une position de repos et une position d'éjection écartée du corps principal par rapport à la position de repos, le corps principal présentant une partie avant recevant l'outil de travail rotatif et une partie arrière reliée à la poignée, du fait que la poignée présente une extrémité libre s'étendant au dessus de l'organe de commande. Cette disposition permet de rendre bien visible l'organe de commande et d'éviter l'actionnement de l'organe de commande par inadvertance, tout en favorisant l'actionnement de l'organe de commande par la main tenant l'appareil avec la poignée. Ainsi l'utilisateur peut exercer une traction sur l'organe de commande avec l'un de ses doigts, notamment avec l'index, tout en maintenant l'appareil par la poignée. Cette disposition facilite la manipulation de l'appareil d'une seule main.

Avantageusement, l'appareil comporte un autre outil de travail rotatif présentant une extrémité d'entraînement insérée dans une ouverture inférieure du corps principal, l'extrémité d'entraînement coopérant avec un autre dispositif d'entraînement en rotation ainsi qu'avec le dispositif d'éjection. Une telle disposition est d'usage courant dans les appareils de type batteur.

Avantageusement alors pour mieux équilibrer les efforts exercés par l'utilisateur, la zone de préhension est disposée entre l'axe de rotation de l'outil de travail rotatif et l'axe de rotation de l'autre outil de travail rotatif.

Selon une forme de réalisation préférée, la zone de préhension est disposée en dessous de la poignée. Cette disposition facilite la préhension.

Selon une forme de réalisation avantageuse, la zone de préhension est disposée au dessus du corps principal entre une partie avant du corps principal recevant l'outil de travail rotatif et une partie arrière du corps principal reliée à la poignée. Cette disposition facilite la préhension de l'organe de commande avec l'index, tout en permettant une construction compacte.

Selon une forme de réalisation avantageuse la zone de préhension est accessible latéralement par rapport à la poignée. Cette disposition facilite également la préhension de l'organe de commande avec l'index.

Selon une forme de réalisation avantageuse, la zone de préhension appartient à un anneau. Cette disposition permet d'assurer une préhension efficace et confortable. En alternative, l'organe de commande pourrait notamment former un crochet.

Avantageusement alors, l'anneau présente une ouverture agencée transversalement par rapport à la poignée. Cette disposition permet de faciliter l'actionnement de l'anneau avec l'index.

Selon une forme de réalisation avantageuse, l'organe de commande est monté pivotant par rapport au corps principal. Cette disposition permet d'obtenir un dispositif d'éjection présentant une construction économique ainsi que des efforts d'actionnement réduits.

Plus particulièrement, l'organe de commande est monté pivotant à l'intérieur du boîtier. Cette disposition permet de faciliter le nettoyage de l'appareil en limitant le nombre des pièces de commande externes.

Selon une forme de réalisation avantageuse, l'organe de commande coopère avec un organe de transmission monté dans le corps principal. Cette disposition permet de diminuer les efforts fournis par l'utilisateur pour actionner le dispositif d'éjection.

Avantageusement alors, l'organe de commande est articulé avec l'organe de transmission au moyen d'une liaison pivot coulissante. Cette disposition permet une construction particulièrement compacte.

Avantageusement alors, l'organe de transmission coopère avec l'extrémité d'entraînement de l'outil de travail rotatif. Cette disposition permet d'obtenir un mécanisme relativement simple.

Avantageusement encore, l'organe de transmission coopère avec l'extrémité d'entraînement de l'autre outil de travail rotatif. Cette disposition permet d'obtenir un mécanisme relativement simple actionnant les deux outils de travail rotatif.

Avantageusement alors, l'organe de transmission coopère avec la face supérieure de ladite ou desdites extrémité(s) d'entraînement. Cette disposition permet de simplifier l'entraînement du ou des outils de travail rotatif.

Avantageusement encore, l'organe de commande coopère avec un ressort de rappel.

L'invention sera mieux comprise à l'étude d'un exemple de réalisation, pris à titre nullement limitatif, illustrés dans les figures annexées, dans lesquelles :
- la figure 1 est une vue en perspective d'un appareil électroménager de préparation culinaire selon l'invention,
- la figure 2 est une vue partielle en perspective éclatée de l'appareil illustré sur la figure 1, dans laquelle des éléments du boîtier de l'appareil ont été retirés, montrant plus particulièrement les éléments du dispositif d'éjection,
- la figure 3 est une vue partielle en perspective de l'appareil illustré sur les figures 1 et 2, dans laquelle des éléments du boîtier de l'appareil ont été retirés, montrant le dispositif d'éjection dans la position de repos autorisant le fonctionnement de l'appareil,
- la figure 4 est une vue partielle en perspective de l'appareil illustré sur les figures 1 à 3, dans laquelle des éléments du boîtier de l'appareil ont été retirés, montrant le dispositif d'éjection dans la position d'éjection.

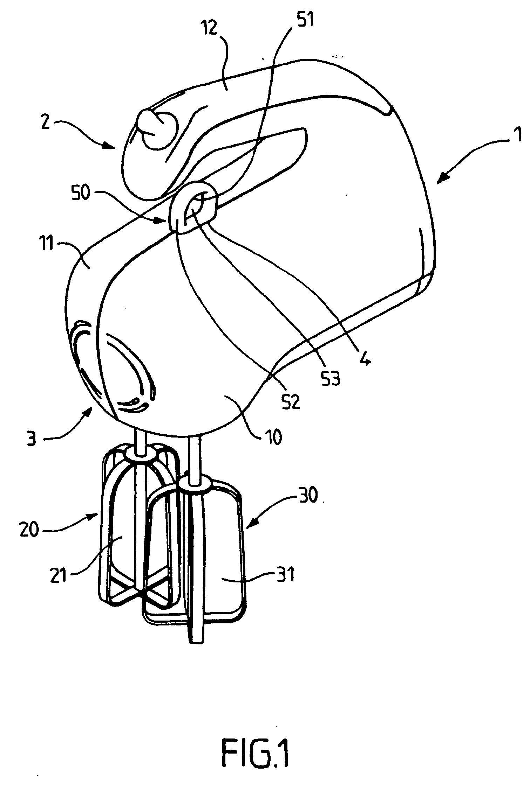

L'appareil électroménager de préparation culinaire de type mélangeur batteur tenu à la main illustré aux figures 1 à 4 comporte un boîtier 1 muni d'une poignée 2 disposée au dessus d'un corps principal 3. La partie arrière du corps principal 3 est reliée à la poignée 2. La partie avant du corps principal 3 est libre par rapport à la poignée 2. La poignée 2 est légèrement relevée par rapport au corps principal 3. L'angle entre la poignée 2 et le corps principal 3 est d'environ 20°.

Le boîtier 1 loge un moteur 14 relié à un dispositif d'entraînement en rotation 15 ainsi qu'à un autre dispositif d'entraînement en rotation 16. Le boîtier 1 est avantageusement réalisé en plusieurs éléments, incluant deux demi coques 10, 11, un capot supérieur 12 et un capot arrière.

L'appareil comporte un outil de travail rotatif 20 et un autre outil de travail rotatif 30 présentant chacun un organe de travail 21, 31 ainsi qu'une extrémité d'entraînement 22, 32 insérée dans une ouverture inférieure du corps principal 3. L'outil de travail rotatif 20 et l'autre outil de travail rotatif 30 sont disposés sous la partie avant du corps principal 3. Chacune des extrémités d'entraînement 22, 32 peut coopérer avec le dispositif d'entraînement en rotation 15 ou avec l'autre dispositif d'entraînement en rotation 16.

Tel que bien visible sur la figure 1, le corps principal 3 présente une partie avant recevant l'outil de travail rotatif 20, ainsi que l'autre outil de travail rotatif 30, et une partie arrière reliée à la poignée 2.

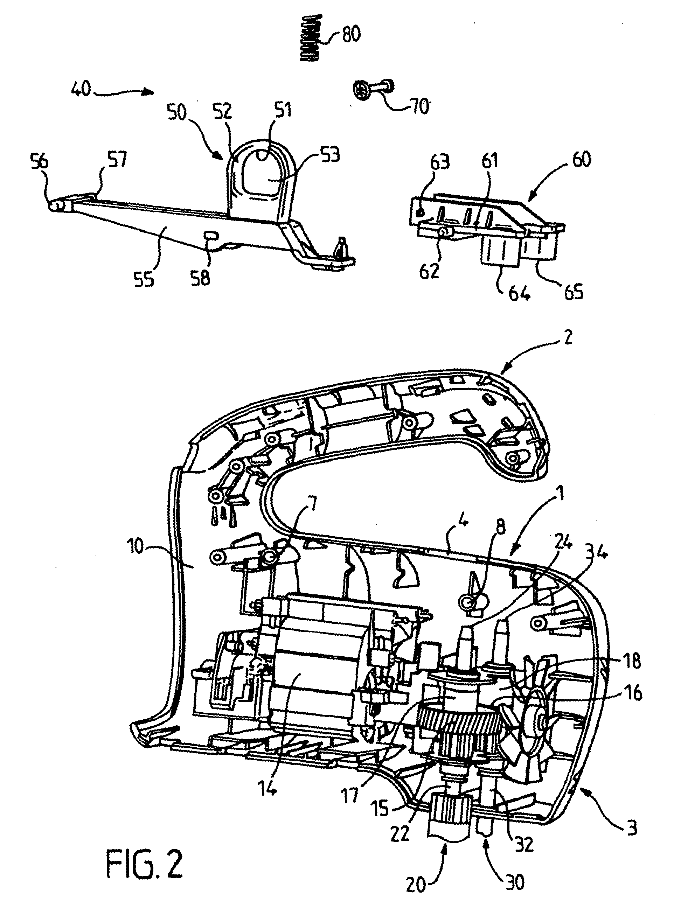

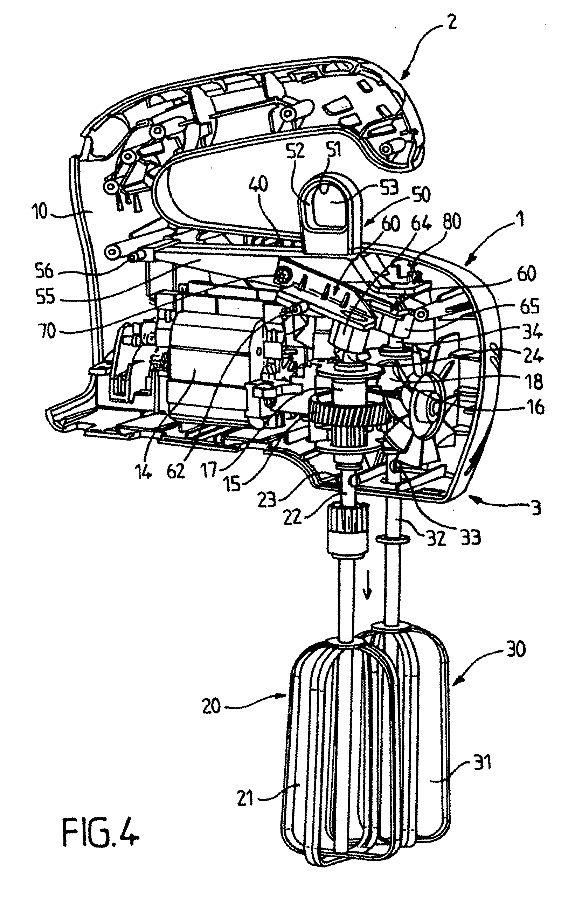

Tel que représenté sur les figures 2 à 4, l'extrémité d'entraînement 21 de l'outil de travail rotatif 20 coopère avec le dispositif d'entraînement en rotation 15 et l'extrémité d'entraînement 31 de l'autre outil de travail rotatif 30 coopère avec l'autre dispositif d'entraînement en rotation 16. Les extrémités d'entraînement 22, 32 sont insérées chacune de manière connue dans une douille élastique 17, 18 du dispositif d'entraînement en rotation 15 ou de l'autre dispositif d'entraînement en rotation 16. A cet effet les extrémités d'entraînement 22, 32 présentent des méplats 23, 33 prévus pour un entraînement en rotation, visibles sur la figure 4.

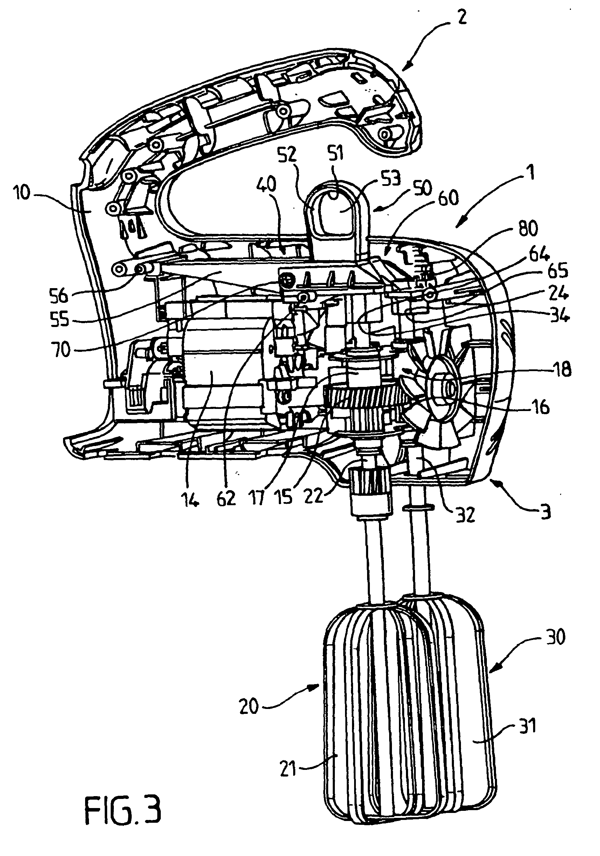

L'appareil comporte un dispositif d'éjection 40, représenté en éclaté sur la figure 2. L'extrémité d'entraînement 22 de l'outil de travail rotatif 20 et l'extrémité d'entraînement 32 de l'autre outil de travail rotatif 30 coopèrent avec le dispositif d'éjection 40, tel que représenté sur les figures 3 et 4.

Le dispositif d'éjection 40 comprend un organe de commande 50 présentant une zone de préhension 51. La zone de préhension 51 sort du boîtier 1 par une ouverture supérieure 4 ménagée dans le corps principal 3. L'ouverture supérieure 4 est ménagée entre les demi coques 10, 11 du corps principal 3. L'ouverture supérieure 4 est disposée sous la poignée 2.

La zone de préhension 51 est agencée en regard de la partie supérieure du corps principal 3. La zone de préhension 51 est disposée au dessus du corps principal 3 entre la partie avant du corps principal 3 recevant l'outil de travail rotatif 20 et la partie arrière du corps principal 3 reliée à la poignée 2.

Tel que bien visible sur la figure 1, la poignée 2 présente une extrémité libre s'étendant au dessus de l'organe de commande 50.

La zone de préhension 51 est disposée en dessous de la poignée 2. La zone de préhension 51 est accessible latéralement par rapport à la poignée 2. La zone de préhension 51 est disposée entre l'axe de rotation de l'outil de travail rotatif 20 et l'axe de rotation de l'autre outil de travail rotatif 30. Toutefois la zone de préhension 51 n'est pas alignée avec l'axe de rotation de l'outil de travail rotatif 20 et l'axe de rotation de l'autre outil de travail rotatif 30.

Selon l'exemple de réalisation illustré sur les figures, la zone de préhension 51 appartient à un anneau 52. L'anneau 52 s'étend longitudinalement sur le boîtier 1. L'anneau 52 s'étend parallèlement à la poignée 2. L'anneau 52 présente une ouverture 53 agencée transversalement par rapport à la poignée 2.

La zone de préhension 51 est montée mobile entre une position de repos illustrée sur la figure 3 et une position d'éjection illustrée sur la figure 4. La position d'éjection est écartée du corps principal 3 par rapport à la position de repos.

L'organe de commande 50 est monté pivotant par rapport au corps principal 3. A cet effet l'organe de commande 50 forme un levier 55 portant l'anneau 52. Le levier 55 présente deux pivots latéraux 56, 57 engagés chacun dans un logement 7 de la face interne du boîtier 1.

L'organe de commande 50 coopère avec un organe de transmission 60 monté dans le corps principal 3. L'organe de transmission 60 forme une bascule 61 munie de deux pivots latéraux opposés 62 engagés chacun dans un logement 8 de la face interne du boîtier 1. L'organe de commande 50 est articulé avec l'organe de transmission 60 au moyen d'une liaison pivot coulissante incluant un axe 70 monté dans des moyens de guidage en translation et rotation 58 du levier 55 ainsi que dans des moyens de guidage en rotation 63 de la bascule 61. L'axe 70 est disposé entre les pivots latéraux 56, 57 de l'articulation du levier 55 et la zone de préhension 51. Les pivots latéraux opposés 62 de la bascule 61 sont disposés entre l'axe 70 et la zone de préhension 51. Cette disposition permet de démultiplier l'effort exercé sur la zone de préhension.

L'organe de transmission 60 coopère avec l'extrémité d'entraînement 22 de l'outil de travail rotatif 20 et avec l'extrémité d'entraînement 32 de l'autre outil de travail rotatif 30. Plus précisément, l'organe de transmission 60 coopère avec des faces supérieures 24, 34 des extrémités d'entraînement 22, 32. A cet effet l'organe de transmission 60 présente deux zones d'appui 64, 65 prévues pour repousser les faces supérieures 24, 34 des extrémités d'entraînement 22, 32. La distance entre les zones d'appui 64, 65 et les pivots latéraux opposés 62 est supérieure à la distance entre les pivots latéraux opposés 62 et l'axe 70. Cette disposition permet d'obtenir une course plus importante pour les zones d'appui avec un organe de transmission 60 de longueur réduite.

L'organe de commande 50 coopère avec un ressort de rappel 80. La position stable du ressort de rappel 80 est illustrée sur la figure 3. Le ressort de rappel 80 est monté entre la face intérieure du boîtier 1 et le levier 55.

La présente invention fonctionne et s'utilise de la manière suivante. L'utilisateur tenant le boîtier 1 par la poignée 2 peut éjecter l'outil de travail rotatif 20 et l'autre outil de travail rotatif 30 sans poser l'appareil. La zone de préhension 51 de l'organe de commande 50 peut être soulevée en utilisant un doigt de la main tenant l'appareil. L'organe de commande 50 est bien accessible.

La réalisation proposée présente ainsi une construction particulièrement ergonomique.

A titre de variante, l'appareil électroménager de préparation culinaire selon l'invention peut comporter au moins un outil de travail rotatif associé à un dispositif d'éjection comportant un organe de commande.

A titre de variante, les moyens de guidage en translation et rotation de l'axe 70 pourraient être ménagés sur la bascule 61.

A titre de variante, la zone de préhension 51 n'appartient pas nécessairement à un anneau mais peut notamment appartenir à un crochet.

La présente invention n'est nullement limitée à l'exemple de réalisation décrit et à ses variantes, mais englobe de nombreuses modifications dans le cadre des revendications.

## Revendications

1. Appareil électroménager de préparation culinaire comportant un boîtier (1) muni d'une poignée (2) disposée au dessus d'un corps principal (3), et un outil de travail rotatif (20) présentant une extrémité d'entraînement (22) insérée dans une ouverture inférieure du corps principal (3), l'extrémité d'entraînement (22) coopérant avec un dispositif d'entraînement en rotation (15) et avec un dispositif d'éjection (40) comprenant un organe de commande (50), l'organe de commande (50) présentant une zone de préhension (51) agencée en regard de la partie supérieure du corps principal (3), ladite zone de préhension (51) étant montée mobile entre une position de repos et une position d'éjection écartée du corps principal (3) par rapport à la position de repos, le corps principal (3) présentant une partie avant recevant l'outil de travail rotatif (20) et une partie arrière reliée à la poignée (2), **caractérisé en ce que** la poignée (2) présente une extrémité libre s'étendant au dessus de l'organe de commande (50).

2. Appareil électroménager de préparation culinaire selon la revendication 1, **caractérisé en ce qu'**il comporte un autre outil de travail rotatif (30) présentant une extrémité d'entraînement (32) insérée dans une ouverture inférieure du corps principal (3), l'extrémité d'entraînement (32) coopérant avec un autre dispositif d'entraînement en rotation (16) ainsi qu'avec le dispositif d'éjection (40).

3. Appareil électroménager de préparation culinaire selon la revendication 2, **caractérisé en ce que** la zone de préhension (51) est disposée entre l'axe de rotation de l'outil de travail rotatif (20) et l'axe de rotation de l'autre outil de travail rotatif (30).

4. Appareil électroménager de préparation culinaire selon l'une des revendications 1 à 3, **caractérisé en ce que** la zone de préhension (51) est disposée en dessous de la poignée (2).

5. Appareil électroménager de préparation culinaire selon l'une des revendications 1 à 4, **caractérisé en ce que** la zone de préhension (51) est disposée au dessus du corps principal (3) entre une partie avant du corps principal (3) recevant l'outil de travail rotatif (20) et une partie arrière du corps principal (3) reliée à la poignée (2).

6. Appareil électroménager de préparation culinaire selon l'une des revendications 1 à 5, **caractérisé en ce que** la zone de préhension (51) est accessible latéralement par rapport à la poignée (2).

7. Appareil électroménager de préparation culinaire selon l'une des revendications 1 à 6, **caractérisé en ce que** la zone de préhension (51) appartient à un anneau (52).

8. Appareil électroménager de préparation culinaire selon la revendication 7, **caractérisé en ce que** l'anneau (52) présente une ouverture (53) agencée transversalement par rapport à la poignée (2).

9. Appareil électroménager de préparation culinaire selon l'une des revendications 1 à 8, **caractérisé en ce que** l'organe de commande (50) est monté pivotant par rapport au corps principal (3).

10. Appareil électroménager de préparation culinaire selon l'une des revendications 1 à 9, **caractérisé en ce que** l'organe de commande (50) coopère avec un organe de transmission (60) monté dans le corps principal (3).

11. Appareil électroménager de préparation culinaire selon les revendications 9 et 10, **caractérisé en ce que** l'organe de commande (50) est articulé avec l'organe de transmission (60) au moyen d'une liaison pivot coulissante.

12. Appareil électroménager de préparation culinaire selon l'une des revendications 10 ou 11, **caractérisé en ce que** l'organe de transmission (60) coopère avec l'extrémité d'entraînement (22) de l'outil de travail rotatif (20).

13. Appareil électroménager de préparation culinaire selon l'une des revendications 2 ou 3 et la revendication 12, **caractérisé en ce que** l'organe de transmission (60) coopère avec l'extrémité d'entraînement (32) de l'autre outil de travail rotatif (30).

14. Appareil électroménager de préparation culinaire selon l'une des revendications 12 ou 13, **caractérisé en ce que** l'organe de transmission (60) coopère avec une face supérieure (24 ; 34) de ladite ou desdites extrémité(s) d'entraînement (22 ; 32)

15. Appareil électroménager de préparation culinaire selon l'une des revendications 1 à 14, **caractérisé en ce que** l'organe de commande (50) coopère avec un ressort de rappel (80).

## Claims

1. An electrical household cooking appliance comprising a housing (1) fitted with a handle (2) arranged above a main body (3), and a rotary working tool (20) comprising a driving end (22) inserted into a lower opening of the main body (3), the driving end (22) cooperating with a rotary driving device (15) and with an ejection device (40) comprising a control member (50), the control member (50) having a gripping zone (51) arranged against an upper part of the main body (3), said gripping zone (51) being mounted movably between a rest position and an ejection position separated from the main body (3) with respect to the rest position, the main body (3) having a front part receiving the rotary working tool (20) and a rear part connected to the handle (2), **characterised in that** the handle (2) has a free end extending above the control member (50).

2. An electrical household cooking appliance according to claim 1, **characterised in that** it comprises another rotary working tool (30) with a driving end (32) inserted into a lower opening of the main body (3), the driving end (32) cooperating with another rotary driving device (16) and with the ejection device (40).

3. An electrical household cooking appliance according claim 2, **characterised in that** the gripping zone (51) is arranged between the axis of rotation of the rotary working tool (20) and the axis of rotation of the other rotary working tool (30).

4. An electrical household cooking appliance according to one of claims 1 to 3, **characterised in that** the gripping zone (51) is arranged above the handle (2).

5. An electrical household cooking appliance according to one of claims 1 to 4, **characterised in that** the gripping zone (51) is arranged above the main body (3) between a front part of the main body (3) receiving the rotary working tool (20) and a rear part of the main body (3) connected to the handle (2).

6. An electrical household cooking appliance according to one of claims 1 to 5, **characterised in that** the gripping zone (51) is accessible laterally from the handle (2).

7. An electrical household cooking appliance according to one of claims 1 to 6, **characterised in that** the gripping zone (51) belongs to a ring (52).

8. An electrical household cooking appliance according to claim 7, **characterised in that** the ring (52) has an opening (53) arranged transversally with respect to the handle (2).

9. An electrical household cooking appliance according to one of claims 1 to 8, **characterised in that** the control member (50) is pivotally mounted with respect to the main body (3).

10. An electrical household cooking appliance according to one of claims 1 to 9, **characterised in that** the control member (50) cooperates with a transmission member (60) mounted in the main body (3).

11. An electrical household cooking appliance according to claims 9 and 10, **characterised in that** the control member (50) is articulated with the transmission member (60) by means of a sliding pivot joint.

12. An electrical household cooking appliance according to one of claims 10 or 11, **characterised in that** the transmission member (60) cooperates with the driving end (22) of the rotary working tool (20).

13. An electrical household cooking appliance according to one of claims 2 or 3 and claim 12, **characterised in that** the transmission member (60) cooperates with the driving end (32) of the other rotary working tool (30).

14. An electrical household cooking appliance according to one of claims 12 or 13, **characterised in that** the transmission member (60) cooperates with an upper face (24; 34) of said driving end(s) (22; 32).

15. An electrical household cooking appliance according to one of claims 1 to 14, **characterised in that** the control member (50) cooperates with a return spring (80).

## Patentansprüche

1. Elektrohaushaltsgerät für kulinarische Zubereitungen, umfassend ein Gehäuse (1), das mit einem Griff (2) ausgestattet ist, der oberhalb eines Hauptkörpers (3) angeordnet ist, und ein drehendes Arbeitswerkzeug (20), das ein Antriebsende (22) aufweist, das in eine untere Öffnung des Hauptkörpers (3) eingefügt ist, wobei das Antriebsende (22) mit einer Drehantriebsvorrichtung (15) und mit einer Auswurfvorrichtung (40) zusammenwirkt, die ein Betätigungsglied (50) umfasst, wobei das Betätigungsglied (50) eine Greifzone (51) aufweist, die gegenüber dem Oberteil des Hauptkörpers (3) angeordnet ist, wobei die Greifzone (51) beweglich zwischen einer Ruheposition und einer Auswurfposition, in der sie in Bezug auf die Ruheposition vom Hauptkörper (3) beabstandet ist, befestigt ist, wobei der Hauptkörper (3) einen Vorderteil, der das drehende Arbeitswerkzeug (20) aufnimmt, und einen Hinterteil aufweist, der mit dem Griff (2) verbunden ist, **dadurch gekennzeichnet, dass** der Griff (2) ein freies Ende aufweist, das sich oberhalb des Betätigungsglieds (50) erstreckt.

2. Elektrohaushaltsgerät für kulinarische Zubereitungen nach Anspruch 1, **dadurch gekennzeichnet, dass** es ein weiteres drehendes Arbeitswerkzeug (30) umfasst, das ein Antriebsende (32) aufweist, das in eine untere Öffnung des Hauptkörpers (3) eingefügt ist, wobei das Antriebsende (32) mit einer weiteren Drehantriebsvorrichtung (16) sowie mit der Auswurfvorrichtung (40) zusammenwirkt.

3. Elektrohaushaltsgerät für kulinarische Zubereitungen nach Anspruch 2, **dadurch gekennzeichnet, dass** die Greifzone (51) zwischen der Drehachse des drehenden Arbeitswerkzeuges (20) und der Drehachse des anderen drehenden Arbeitswerkzeuges (30) angeordnet ist.

4. Elektrohaushaltsgerät für kulinarische Zubereitungen nach einem der Ansprüche 1 bis 3, **dadurch gekennzeichnet, dass** die Greifzone (51) unterhalb des Griffes (2) angeordnet ist.

5. Elektrohaushaltsgerät für kulinarische Zubereitungen nach einem der Ansprüche 1 bis 4, **dadurch gekennzeichnet, dass** die Greifzone (51) oberhalb des Hauptkörpers (3) zwischen einem Vorderteil des Hauptkörpers (3), der das drehende Arbeitswerkzeug (20) aufnimmt, und einem Hinterteil des Hauptkörpers (3), der mit dem Griff (2) verbunden ist, angeordnet ist.

6. Elektrohaushaltsgerät für kulinarische Zubereitungen nach einem der Ansprüche 1 bis 5, **dadurch gekennzeichnet, dass** die Greifzone (51) in Bezug auf den Griff (2) seitlich zugänglich ist.

7. Elektrohaushaltsgerät für kulinarische Zubereitungen nach einem der Ansprüche 1 bis 6, **dadurch gekennzeichnet, dass** die Greifzone (51) zu einem Ring (52) gehört.

8. Elektrohaushaltsgerät für kulinarische Zubereitungen nach Anspruch 7, **dadurch gekennzeichnet, dass** der Ring (52) eine Öffnung (53) aufweist, die in Bezug auf den Griff (2) quer verlaufend angeordnet ist.

9. Elektrohaushaltsgerät für kulinarische Zubereitungen nach einem der Ansprüche 1 bis 8, **dadurch gekennzeichnet, dass** das Betätigungsglied (50) schwenkbar in Bezug auf den Hauptkörper (3) befestigt ist.

10. Elektrohaushaltsgerät für kulinarische Zubereitungen nach einem der Ansprüche 1 bis 9, **dadurch gekennzeichnet, dass** das Betätigungsglied (50) mit einem Übertragungsglied (60) zusammenwirkt, das im Hauptkörper (3) befestigt ist.

11. Elektrohaushaltsgerät für kulinarische Zubereitungen nach Anspruch 9 und 10, **dadurch gekennzeichnet, dass** das Betätigungsglied (50) mithilfe eines Gleitdrehgelenks gelenkig mit dem Übertragungsglied (60) verbunden ist.

12. Elektrohaushaltsgerät für kulinarische Zubereitungen nach einem der Ansprüche 10 oder 11, **dadurch gekennzeichnet, dass** das Übertragungsglied (60) mit dem Antriebsende (22) des drehenden Arbeitswerkzeuges (20) zusammenwirkt.

13. Elektrohaushaltsgerät für kulinarische Zubereitungen nach einem der Ansprüche 2 oder 3 und nach Anspruch 12, **dadurch gekennzeichnet, dass** das Übertragungsglied (60) mit dem Antriebsende (32) des anderen drehenden Arbeitswerkzeuges (30) zusammenwirkt.

14. Elektrohaushaltsgerät für kulinarische Zubereitungen nach einem der Ansprüche 12 oder 13, **dadurch gekennzeichnet, dass** das Übertragungsglied (60) mit einer Oberseite (24 ; 34) des Antriebsendes oder der Antriebsenden (22 ; 32) zusammenwirkt.

15. Elektrohaushaltsgerät für kulinarische Zubereitungen nach einem der Ansprüche 1 bis 14, **dadurch gekennzeichnet, dass** das Betätigungsglied (50) mit einer Rückholfeder (80) zusammenwirkt.
